# EUROPÄISCHE PATENTANMELDUNG

(11) **EP 1 408 192 A2**
(43) Veröffentlichungstag der Anmeldung: **14.04.2004**
(21) Anmeldenummer: 03018806.4
(22) Anmeldetag: 19.08.2003
(51) Int. Cl.: E06B 3/62, B29C 47/04, B29L 31/26, B29K 105/26

(54) **Dichtung für ein Fensterprofil und Verfahren zu deren Herstellung**

(30) Priorität: 08.10.2002 DE 10246932
(71) Anmelder: aluplast GmbH, 76275 Ettlingen (DE)
(72) Erfinder:
(74) Vertreter: Petersen, Frank, Dipl.-Ing.

(57) **Zusammenfassung**

Die Erfindung betrifft ein Verfahren zur Herstellung einer Dichtung aus thermoplastischem Material für ein Fensterprofil, die einen Dichtungsabschnitt (21) aufweist sowie einen Fußabschnitt (22) zur Befestigung in dem Fensterprofil. Es wird vorgeschlagen bei diesem Verfahren den Fußabschnitt (22) der Dichtung aus recycletem Material herzustellen.

Außer dem Verfahren betrifft die Erfindung eine derartige Dichtung.

## Beschreibung

Die Erfindung betrifft ein Verfahren zur Herstellung einer Dichtung aus thermoplastischem Material für ein Fensterprofil, die einen Dichtungsabschnitt aufweist sowie einen Fußabschnitt zur Befestigung in dem Fensterprofil. Außerdem betrifft sie eine entsprechende Dichtung.

Dichtungen der angesprochenen Art sind allgemein bekannt. Sie werden sowohl in Holz-, als auch in Kunststoff- oder aber in Aluminiumfenster eingesetzt, um zwischen Fensterprofilen abzudichten. Die Fensterprofile bilden dabei Fensterrahmen oder Fensterflügel, die mit entsprechenden Glaseinsätzen versehen sind. Grundsätzlich können derartige Fensterflügel und Fensterrahmen bzw. Fensterprofile auch zum Bau von Balkon-, Terrassen-, Wohnungs- oder Haustüren genutzt werden. Die Dichtungen können selbst als Halbfertig-Ware vorliegen oder aber werden bei der Extrusion eines Fensterprofils direkt in das Profil anoder einextrudiert.

Dabei gibt es trotz der hohen technischen Entwicklung in der Kunststoffindustrie manchmal Probleme durch Kundenanforderungen vorgegebene Qualitätsmerkmale zu erreichen: Es wird viel Wissen über den Herstellungsprozess von Produkten benötigt, wobei gerade kunststoffverarbeitende Prozesse sich durch komplexe Wechselwirkungen zwischen Rohstoff, Verarbeitungsprozess und Produkteigenschaften auszeichnen. Obwohl alle am Produktionsprozess Beteiligten ein Verständnis über die komplexen Prozesse der Kunststoffverarbeitung haben, wird eine geforderte Qualität nicht erreicht, so dass das produzierte Fensterprofil und/oder eine produzierte Dichtung als "unbrauchbar" einzustufen ist. Ein derartiges Produkt ist dann als "Ausschuss" zu betrachten.

Da es zum Beispiel wegen An- oder Auslauf-Phasen, aber auch wegen eventuellen Störungen im Herstellungs-Prozess keine ausschussfreie Produktion gibt, stellt sich einem Unternehmen die Aufgabe, sich Gedanken über die Verwendung des Ausschussmaterials zu machen. Die Wiederverwendung von derartigem Ausschussmaterial hat dabei nicht nur wirtschaftliche Vorteile sondern ist gerade unter Umweltgesichtspunkten erwünscht.

Ein Recycling ist nicht ohne weiteres möglich. Es hat sich nämlich herausgestellt, dass einfach nur gemahlenes Ausschussmaterial eine sehr ungleichmäßige Korngrößenverteilung aufweist. Extrudiert man ein derartiges Material, schmelzen feinere Körner relativ schnell auf, während größere erst anfangen aufzuschmelzen. Bei dem nachfolgenden Abkühlen migrieren dann unverschmolzene Partikel an die Oberfläche der Dichtung, wodurch sich eine ungeschlossene (rauhe) Oberfläche ergibt. Diese erfüllt nicht die Anforderungen, die eine Dichtung im Anlagebereich erfüllen muss.

Es wurde zwar überlegt, durch Aussiebung gemahlenes Ausschussgut mit einer engeren Kornverteilung zu erhalten. Hierfür sind aber sowohl zusätzliche Investitionen und damit unerwünschte Kosten verbunden als auch das Problem, dass ein ausgesiebter Feinanteil verfahrenstechnisch gesehen sehr schwer zu verarbeiten ist.

Bei weiteren Überlegungen ist in Betracht gezogen worden, gemahlenes Ausschuss-Material mit Frischmaterial zu vermischen. Auch hierbei hat man aber das oben angesprochene Problem von rauhen Dichtungsoberflächen nicht lösen können, da auch bei diesem Verfahren aus dem Ausschussmaterial stammende unverschmolzene Partikel beim Abkühlen an die Oberfläche migrieren und dort die Dichtungsfläche aufrauhen.

Aufgabe der vorliegenden Erfindung ist es daher, eine Dichtung bzw. ein Verfahren zu deren Herstellung anzugeben, mit der die oben beschriebenen Probleme nicht auftreten.

Diese Aufgabe wird erfindungsgemäß dadurch gelöst, dass der Dichtungsabschnitt und der Fußabschnitt der vorgesehenen Dichtung in einem Co-Extruder aus unterschiedlichen Materialien hergestellt werden, die sich bei der Coextrusion dann fest miteinander verbinden.

Mit einem derartigen Verfahren ist eine Dichtung zu erreichen, die in ihrem eigentlichen Dichtungsabschnitt eine geforderte Glattheit ihrer Oberfläche aufweist. Die im Fußabschnitt erreichte Oberfläche ist dabei unkritisch, da sie in entsprechenden Aufnahmenuten am Fensterprofil zu liegen kommt, wo sie weder ein optisches Erscheinungsbild beeinträchtigt noch in eine Dichtanlage mit einem gegenüberliegenden Fensterprofil kommt.

Mit einer derartigen zweigeteilten Dichtung hat man auch die Möglichkeit, das der Fußabschnitt eine höhere Materialfestigkeit aufweist als der Dichtungsabschnitt.

Zum einen kann sich der Dichtungsabschnitt damit weicher an eine Dichtfläche anlegen und damit seine Dichtfunktion besser erfüllen. Zum anderen ist mit einem derartigen festeren Fußabschnitt eine bessere Fixierung der Dichtung in einer Aufnahmenut am Fensterprofil zu erreichen.

Es hat sich dabei herausgestellt, dass das Material des Fußabschnittes insbesondere wegen der bei der Coextrusion auftretenden zweiten Aufschmelzung diese erhöhte Festigkeit aufweist.

Grundsätzlich ist es zwar auch möglich, Frischmaterial zweifach zu extrudieren, um diese gewünschte Verfestigung zu erreichen. Vorzugsweise wird aber Recyclingmaterial verwandt, das wie bereits erläutert, im Recyclingprozess gemahlen wird.

Vorzugsweise kann die Dichtung auch direkt bei der Extrusion eines Fensterprofils aus Kunststoff mit diesem zusammen coextrudiert werden.

Weitere Vorteile und Merkmale der Erfindung ergeben sich aus der nachfolgenden Beschreibung von Ausführungsbeispielen. Dabei zeigt
- Figur 1: den Schnitt durch ein Fensterprofil;
- Figur 2: ein Fließschema für eine Vorrichtung zur Herstellung von coextrudierten Dichtungen;
- Figur 3: Schnitte durch Dichtungen mit coextrudierten Dichtungs- und Fußabschnitten.

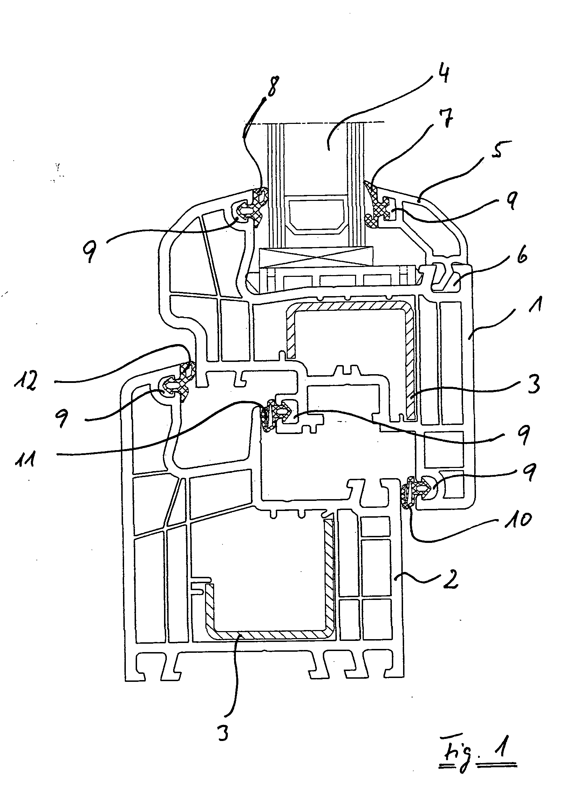

In Figur 1 erkennt man den Schnitt durch ein Fensterprofil 1 für ein Fensterflügel, der in Anlage ist an dem Fensterprofil 2 für einen Fensterrahmen.

Die beiden Fensterprofile sind im hier dargestellten Beispiel aus Hart-PVC hergestellt und weisen jeweils einen Metallkern 3 auf der vorzugsweise aus Aluminium ist.

In dem Fensterprofil 1 des Fensterflügels wird eine Isolierglasscheibe 4 durch eine Spannleiste 5 gehalten, die in einer entsprechenden Nut 6 am Fensterprofil 1 zu fixieren ist. Zwischen der Isolierglasscheibe 4 und der Spannleiste 5 findet sich eine Dichtung 7. In gleicher Weise findet sich zwischen der Isolierglasscheibe 4 und dem Fensterprofil 1 eine weitere Dichtung 8.

Diese Dichtungen haben an der Isolierglasscheibe 4 anliegende Dichtungsabschnitte sowie in entsprechenden Aufnahmenuten 9 an der Spannleiste 5 bzw. dem Fensterprofil 1 sitzende Fußabschnitte. Diese Fußabschnitte sind im wesentlichen T-förmig ausgebildet, um sich in Hinterschneidungen der Aufnahmenuten 9 halten zu können.

In gleicher Weise sind noch Dichtungen 10, 11 und 12 an entsprechenden Aufnahmenuten 9 der Fensterprofile 1 bzw. 2 befestigt. Mit diesen Dichtungen wird bei Anlegen des Fensterflügels aus dem Fensterprofil 1 an den Fensterrahmen bestehend aus dem Fensterprofil 2 eine ausreichende Dichtigkeit erreicht.

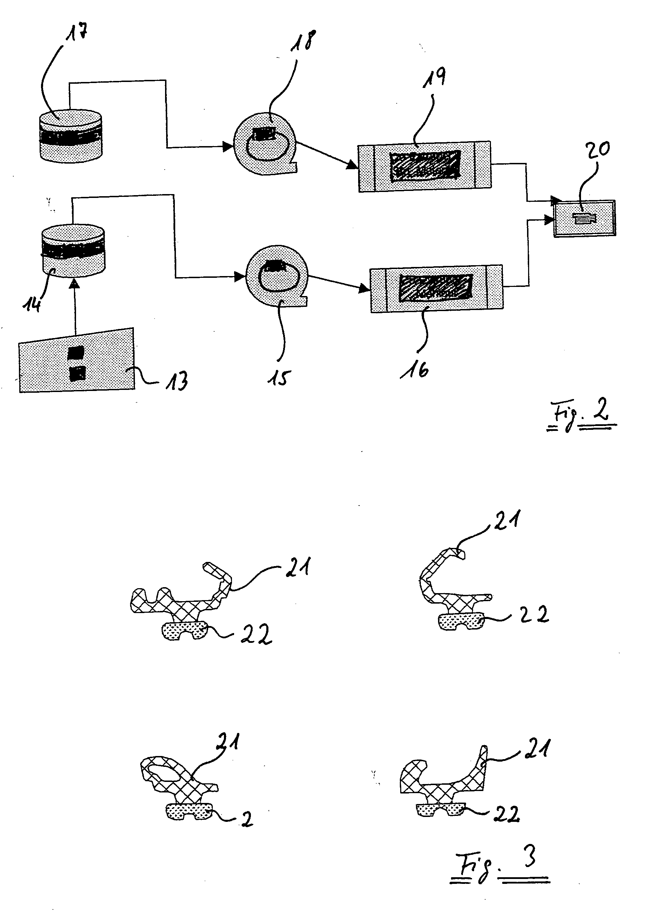

Die dargestellten Dichtungen sind wie in der Figur 2 dargestellt hergestellt:

Ausschussmaterial von fehlerhaften Dichtungen wird in einer Mühle 13 gemahlen und von dort in einen Sammelbehälter 14 transportiert. Aus diesem Behälter 14 wird das gemahlene Gut durch eine Saugförderanlage 15 zu einem Extruder 16 gefördert.

In gleicher Weise wird aus einem weiteren Behälter 17 Frischmaterial über eine weitere Saugförderanlage 18 an einen Extruder 19 gefördert.

Die beiden Extruder 16 und 19 verflüssigen das ihnen zugeführte Material und drücken es in eine Coextrusionsdüse 20. Dabei wird das Frischmaterial aus dem Behälter 17 dafür verwandt, den Dichtungsabschnitt einer extrudierten Dichtung herzustellen, während das in der Mühle 13 zermahlene und dann im Sammelbehälter 14 aufgenommene Recyclingmaterial über den Extruder 16 in den Fußabschnitt der Dichtung gedrückt wird.

Auf diese Art und Weise können mit der Coextrusionsdüse 20 Dichtungen hergestellt werden, wie sie in der Figur 3 zu erkennen sind. Bei diesen sind jeweils die Dichtungsabschnitte 21 aus weicherem Frischmaterial hergestellt, während die Fußabschnitte 22 aus recyceltem Material bestehen. Dieses recycelte Material gibt den Fußabschnitten eine erhöhte Festigkeit, so dass derartige Dichtungen fester in entsprechenden Nuten an den Fensterprofilen 1 oder 2 sitzen.

Es sei hier noch darauf hingewiesen, dass in der Figur 3 die Trennlinie zwischen dem Dichtungsabschnitt 21 und den Fußabschnitten 22 nur der besseren Darstellung wegen durchgezogen ist. Tatsächlich vermischen sich in diesem Bereich die Dichtungsmaterialien untrennbar miteinander.

Die Erfindung hat den Vorteil, dass mit ihr nicht nur ansonsten ungenutztes Ausschussmaterial Kosten- und ressourcenschonend weiterzuverwenden ist, sondern dass außerdem auch Dichtungen erreicht werden können, die dauerhafter in Fensterprofilen sitzen.

## Patentansprüche

1. Verfahren zur Herstellung einer Dichtung (7, 8, 10, 11, 12) aus thermoplastischem Material für ein Fensterprofil (1, 2), die einen Dichtungsabschnitt (21) aufweist sowie ein Fußabschnitt (22) zur Befestigung in dem Fensterprofil (1, 2),
**dadurch gekennzeichnet,**
**dass** der Dichtungsabschnitt (21) und der Fußabschnitt (22) in einem Coextruder (16, 19, 20) aus unterschiedlichen Materialien (14, 17) hergestellt werden, die sich bei der Coextrusion fest miteinander verbinden.

2. Verfahren gemäß Anspruch 1,
**dadurch gekennzeichnet,**
**dass** das Material des Fußabschnittes (22) in erkaltetem Zustand eine höhere Festigkeit aufweist als das Material des Dichtungsabschnittes (21).

3. Verfahren gemäß Anspruch 1,
**dadurch gekennzeichnet,**
**dass** das Material des Fußabschnittes (22) bei der Coextrusion ein zweites Mal aufgeschmolzen wird.

4. Verfahren gemäß Anspruch 3,
**dadurch gekennzeichnet**
**dass** das Material des Fußabschnittes (22) durch Recycling von bereits extrudiertem Material bereitgestellt wird.

5. Verfahren gemäß Anspruch 4,
**dadurch gekennzeichnet,**
**dass** das bereits extrudierte Material beim Recycling gemahlen wird.

6. Verfahren gemäß Anspruch 1,
**dadurch gekennzeichnet,**
**dass** die Dichtung (7, 8, 10, 11, 12) bei der Extrusion eines Fensterprofils (1, 2) mit diesem coextrudiert wird.

7. Dichtung (7, 8, 10, 11, 12) für ein Fensterprofil (1, 2) mit einem Dichtungsabschnitt (21) und einem Fußabschnitt (22), die einstückig miteinander verbunden sind,
**dadurch gekennzeichnet,**
**dass** der Fußabschnitt (22) eine höhere Materialfestigkeit hat als der Dichtungsabschnitt (21).

8. Dichtung gemäß Anspruch 1,
**dadurch gekennzeichnet,**
**dass** die Dichtung aus thermoplastischem Material ist.

9. Dichtung gemäß Anspruch 1,
**dadurch gekennzeichnet,**
**dass** der Fußabschnitt (22) aus Recyclingmaterial ist.
